# FASCICULE DE BREVET EUROPEEN

(11) **EP 2 740 630 B1**
(45) Date de publication et mention de la délivrance du brevet: **04.11.2020**
(21) Numéro de dépôt: 12306525.2
(22) Date de dépôt: 05.12.2012
(51) Int. Cl.: B60L 53/16, B60L 53/18, B60L 53/30, B60L 53/31, B60L 53/65, B60L 53/66

(54) **Borne de recharge à caisson et coiffe amovible**
Aufladeklemme mit Gehäuse und abnehmbarer Schutzkappe
Recharging terminal with box and removable cover

(43) Date de publication de la demande: 11.06.2014
(73) Titulaire: HAGER-ELECTRO SAS, 67210 Obernai (FR); AUBRILAM (Société par Actions Simplifiée), 63000 Clermont-Ferrand (FR)
(72) Inventeur: Petris, Antonio, 33080 Porcia (IT); Pfeifer, Christoph, 67707 Schopp (DE); Gouteyron, Jacques, 13007 Marseille (FR); Miloudi, Soufyane, 03200 Vichy (FR)
(74) Mandataire: Nuss, Laurent

(56) Documents cités:
- WO-A1-2012/034225
- DE-U1-202010 005 543
- GB-A- 2 315 373
- US-A1- 2011 246 014

## Description

La présente invention relève du domaine des équipements de recharge électrique pour batterie motrice de véhicule automobile et a pour objet une borne de recharge particulière, en particulier une borne de recharge à installer au sol.

WO2011037636 divulgue une borne de recharge qui fait partie intégrante d'une structure architecturale formant un abri pour le véhicule à charger. Une telle installation est toutefois couteuse, volumineuse et difficile à adapter à d'autres configurations de stationnement. La conception sous forme de borne autonome placée au sol est préférable.

US2001003413 divulgue une borne de recharge fixée au sol, comprenant essentiellement un poteau sur lequel se trouve un coffret muni d'un socle dans lequel peut venir, en dehors des périodes d'utilisation, la fiche dont le câble de recharge est muni et servant au branchement au véhicule.

US5306999 divulgue une borne de recharge destinée à être installée au sol, présentant là aussi un coffret placé au dessus d'un montant, un bras articulé pouvant être escamoté dans ledit montant ou en être sorti pour la connexion au véhicule. Un bras articulé est toutefois moins facile à utiliser et moins ergonomique qu'un câble souple.

FR2699747 divulgue une borne de branchement placée au sol, pouvant être escamotée sous le niveau du sol et en sortir pour le branchement. La partie supérieure de la borne comprend des sources de lumière, qui signalent le mouvement vertical de la borne.

Un des éléments techniques de l'extérieur de la borne est bien entendu le socle de branchement, et bien souvent son clapet ou volet de protection.

Ainsi, FR2742250 divulgue une borne au sol, munie d'un volet d'accès au socle qui est verrouillé lors de la fourniture d'électricité, de sorte à empêcher le débranchement du câble.

US2010013433 divulgue quant à lui une borne de recharge de forme allongée, destinée à être posée à demeure au sol, et présentant un volet de protection du socle de branchement du câble, ce volet pouvant être verrouillé ou déverrouillé dans deux positions différentes.

GB2438979 divulgue enfin une borne de recharge au sol, sous la forme d'un poteau allongé muni d'un volet de protection du socle de branchement, la fourniture d'énergie n'étant permise que si le volet est fermé.

Un des inconvénients majeurs des bornes de recharge connues jusqu'à présent est que la modification de leur aspect extérieur n'est pas possible, car nécessitant généralement une reconception en profondeur, même au niveau de la configuration des équipements électriques qu'elle comprend : modules de sécurité, de mesure, de communication, de transmission, etc. L'invention vise donc essentiellement à proposer une borne de recharge dont l'aspect extérieur peut être facilement adapté.

Un autre inconvénient est qu'il peut être parfois difficile de repérer une borne de loin, ce qui est nécessaire lorsque celle-ci se trouve sur un parking public, dans une zone dédiée aux véhicules électriques, par exemple. En outre, un rendu visuel extérieur de l'état de la recharge est aussi fortement souhaitée : il est en effet utile pour l'utilisateur de s'assurer, avant de quitter son véhicule pour un long moment, que la recharge aura lieu pendant son absence.

La présente invention a pour but de pallier au moins une partie et préférentiellement tous ces inconvénients et propose de réaliser la borne sous forme d'au moins un caisson sur lequel peut venir au moins une coiffe interchangeable. Le au moins un caisson peut alors être un élément standard et versatile, renfermant les fonctions électriques, et tout type de coiffe géométriquement et mécaniquement compatible peut être installé.

A cet effet l'invention a pour objet une borne de recharge comprenant des équipements électriques pour la gestion de la recharge de batterie motrice de véhicule, tels que modules pour le contrôle du courant de recharge, la mesure d'électricité, la sécurité, la communication, le paiement, un câble de connexion ou simplement un socle de branchement d'un tel câble.

La borne de recharge comprend un caisson, dans lequel est monté l'essentiel des équipements électriques, et une coiffe placée sur ledit caisson. La borne de recharge présente au moins un socle de branchement pour un câble de recharge, ainsi qu'un volet de protection pour ledit socle. Le au moins un socle est monté sur le caisson. La borne est caractérisée en ce que son volet est monté sur la coiffe.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la figure 1 montre une vue d'ensemble d'une borne de recharge selon l'invention ;
- la figure 2 montre une vue en perspective de la coiffe ;
- la figure 3 montre une vue en perspective du caisson ;
- la figure 4 montre une vue du caisson, une porte démontée pour illustrer l'intérieur ;
- la figure 5 montre une coupe transversale du montage caisson et coiffe ;
- la figure 6 montre la partie supérieure de la coiffe, sans chapeau d'obturation ;
- la figure 7 montre la partie supérieure, dépourvu de volet de protection du socle ;
- la figure 8 montre une coupe de la partie supérieure de la coiffe, avec les volets montés ;
- la figure 9 montre une portion de la borne, avec un câble de recharge branché et le volet démonté ;
- la figure 10 montre la partie supérieure du caisson, avec un socle de branchement ;
- la figure 11 montre la partie inférieure du caisson ;
- la figure 12 montre le verrouillage de la coiffe sur le caisson ;
- la figure 13 montre un mode de réalisation sous la forme d'une borne murale, et
- la figure 14 montre la borne murale partiellement ouverte.

L'invention a donc pour objet une borne de recharge 1 comprenant des équipements électriques pour la gestion de la recharge de batterie motrice de véhicule, tels que modules pour le contrôle du courant de recharge, la mesure d'électricité, la sécurité, la communication, le paiement, un câble de connexion ou simplement un socle 2 de branchement d'un tel câble.

La borne de recharge 1 peut être destinée à un montage au sol directement, comme dans un parking ouvert. Dans ce cas, seule sa base est reliée à une surface d'appui formée par le sol lui-même, les autres surfaces extérieures de la borne de recharge 1 étant libres. Alternativement ou de façon additionnelle, la borne de recharge 1 peut être montée contre un mur ou autre support vertical. La borne de recharge 1 peut ainsi prendre la forme d'un coffret, d'un poteau, ou autres.

La borne de recharge 1 comprend un ensemble d'équipements électriques pour la fourniture d'une électricité de puissance destinée à la recharge de batterie motrice pour un véhicule électrique ou hybride. Ces équipements électriques remplissent donc des fonctions liées à cette fourniture, comme : détecter l'identité d'un abonné, par une cellule RFID ou autre identifiant, assurer la sécurité, comptabiliser l'énergie consommée, limiter le courant, assurer la sécurité de la circulation d'électricité, ou autres.

Selon l'invention, la borne de recharge 1 comprend un caisson 3, dans lequel est monté l'essentiel des équipements électriques, et une coiffe 4 placée sur ledit caisson 3. Des bornes de recharge 1 plus élaborées peuvent bien entendu contenir plusieurs caissons 3 et plusieurs coiffes 4.

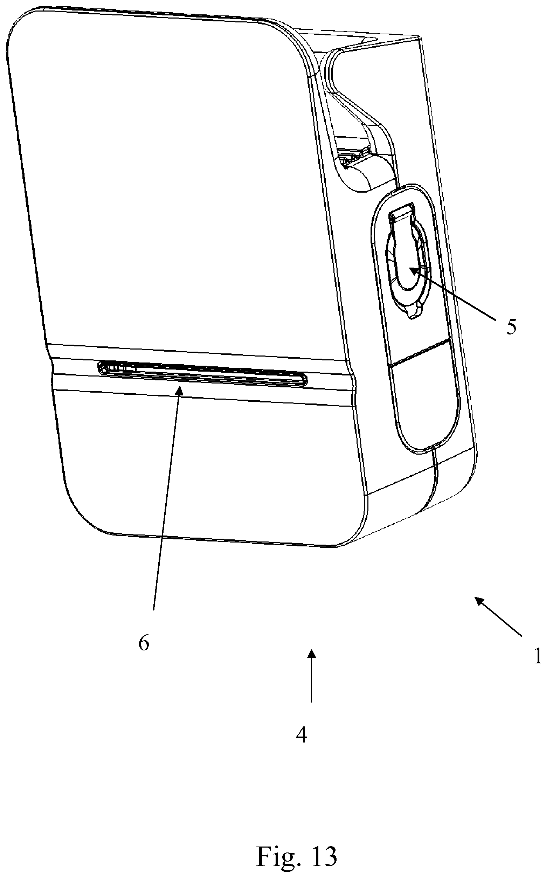

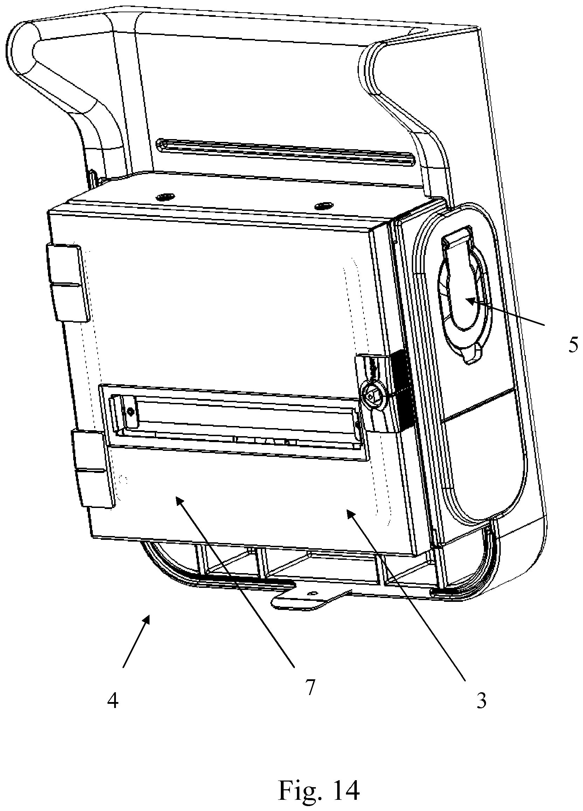

La borne de recharge 1 peut en particulier être de forme allongée, posée au sol au niveau de sa section inférieure, la coiffe 4 pouvant enrober le caisson 3 sur toute sa périphérie, sur une partie de la périphérie, et/ou sur toute la longueur du caisson 3 ou encore seulement sur une longueur du caisson 3. La coiffe 4 peut donc former un capot placé sur le caisson 3, qui le recouvre entièrement ou non. Dans les figures 13 et 14, une borne de recharge 1 murale est représentée, la coiffe 4 prenant la forme de deux coques pouvant être fixées l'une à l'autre en enrobant le caisson 3, la coque arrière venant être fixé au mur.

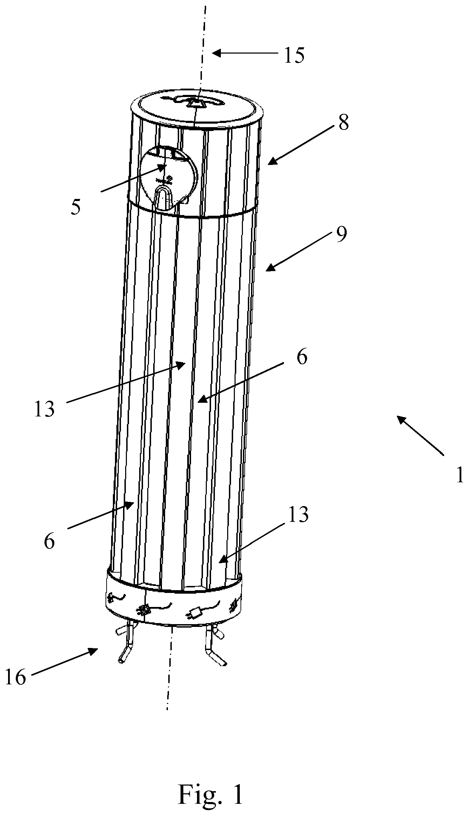

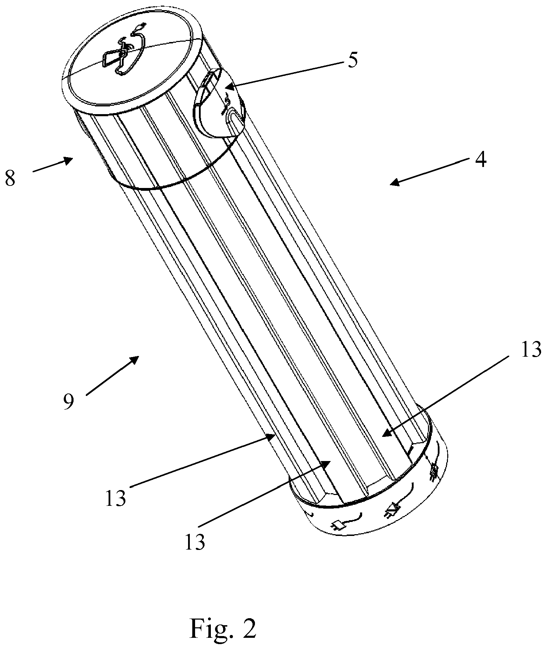

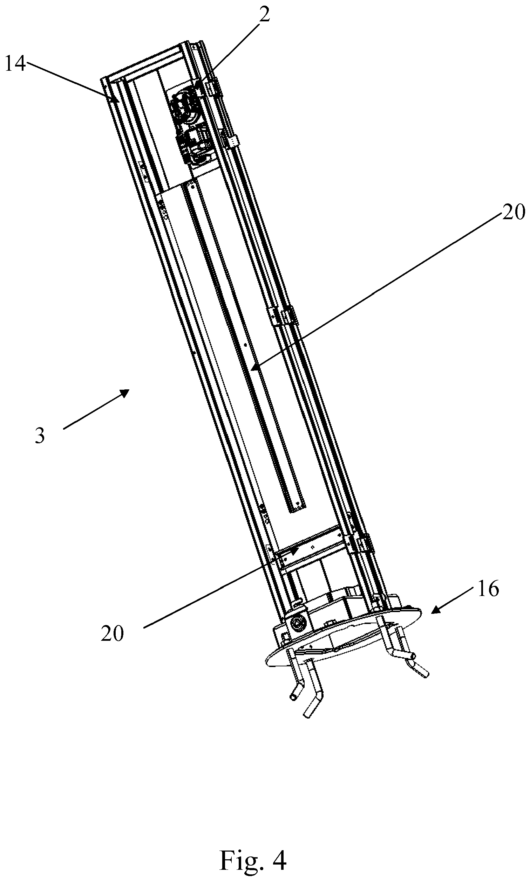

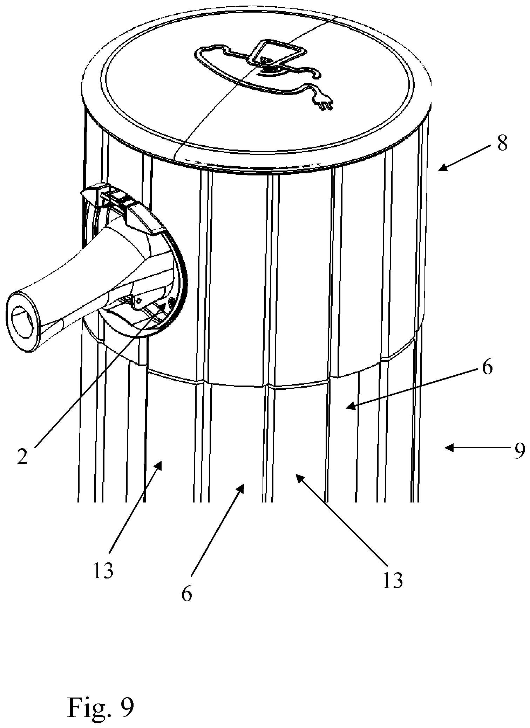

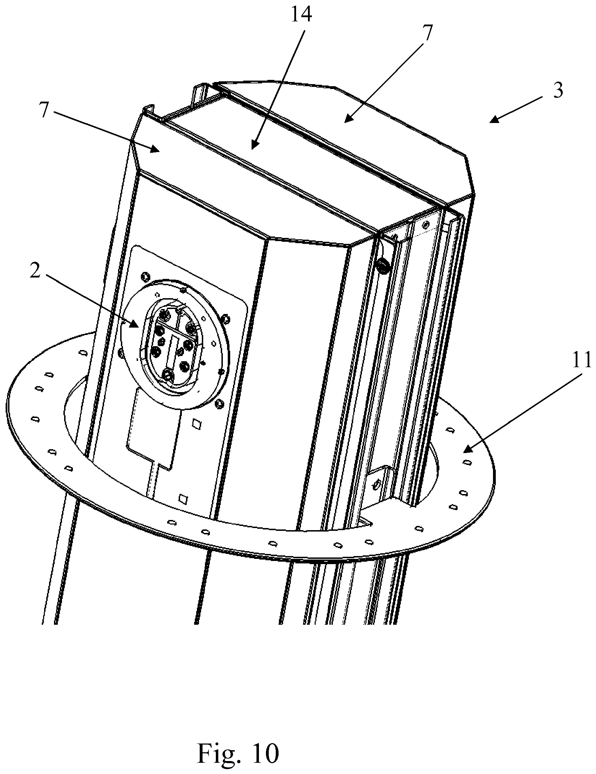

Préférentiellement, la coiffe 4 amovible forme une partie substantielle de l'extérieur de la borne de recharge 1, afin de contribuer à son aspect visuel extérieur. La coiffe 4 est montée sur le caisson 3 de façon démontable et interchangeable. Il suffit de dégager la coiffe 4 pour avoir accès aux équipements techniques en cas de maintenance. Le caisson 3 peut rester ancré au sol, et il suffit de démonter la coiffe 4 et de la séparer du caisson 3, comme dans le mode de réalisation des figures 1 à 12. La borne de recharge 1 est donc conçue sous forme d'un assemblage de deux éléments, à savoir, d'une part, le caisson 3, et, d'autre part, la coiffe 4, ces deux éléments étant facilement séparés l'un de l'autre. L'exemple des figures 13 et 14 montre par ailleurs que la coiffe peut être en plus qu'une partie.

Le caisson 3 comprend l'essentiel des équipements électriques chargés de la recharge, et forme ainsi un module technique. Les équipements électriques sont donc essentiellement regroupés dans un caisson 3, qui peut être unique et donc commun à tous les postes de fourniture d'électricité que comprend la borne, où dédié à un seul de ces postes, au quel cas la borne de recharge 1 comprend autant de caisson 3 que de postes de fourniture, à savoir de câble de recharge ou de socle 2 de branchement d'un tel câble. C'est préférentiellement le caisson 3 qui est ancré au sol directement.

En séparant ainsi, d'une part, un module technique, à savoir le au moins un caisson 3, regroupant les équipements électriques dédiés aux fonctions de recharge, et, d'autre part, au moins un module d'aspect, à savoir la coiffe 4, venant couvrir le module technique au moins partiellement, il est possible d'adapter l'aspect de la borne de recharge 1, sous forme d'assemblage de ces deux modules, sans devoir reconcevoir le module technique. En effet, les contraintes de compatibilité géométrique sont les contraintes essentielles à prendre en compte pour assurer la versatilité du module technique et donc l'interchangeabilité entre la coiffe 4 et le caisson 3.

Selon une caractéristique additionnelle possible, la borne de recharge 1 présente au moins un socle 2 de branchement pour un câble de recharge, ainsi qu'un volet 5 de protection pour ledit socle 2, le au moins un socle 2 étant monté sur le caisson 3, son volet 5 étant monté sur la coiffe 4.

Le volet 5 de protection peut être un volet coulissant, un clapet pivotant ou autre type de couvercle. Il empêche provisoirement l'accès au socle 2, et peut être muni de moyens de verrouillage, empêchant son ouverture par exemple avant l'identification de l'utilisateur, au cours de la recharge, etc. Le socle 2 est monté sur le caisson 3, et forme ainsi une embase de connexion mécanique et électrique pour un câble de recharge. Les conducteurs électriques du socle 2 se trouvent donc au niveau du caisson 3, le volet 5 de protection se trouvant, quant à lui, monté sur la coiffe 4. Le câble de recharge peut être maintenu par serrage mécanique dans le socle 2 des fiches qu'il porte, où la borne de recharge 1 peut être muni d'un autre moyen de maintien du câble, par exemple au niveau de la coiffe 4, voire au niveau du volet 5. Le volet 5 est monté sur la coiffe 4 grâce à un boîtier adapté. Dans le mode de réalisation des figures 13 et 14, le boîtier du volet 5 est enchâssé entre les deux coques constitutives de la coiffe 4.

Les fonctions de protection étanche et d'enfichage de câble sont donc séparée entre, d'une part, la coiffe 4 qui porte le volet 5 assurant essentiellement l'étanchéité et contrôlant l'accès au courant à travers une ouverture 10 que traverse le câble, et, d'autre part, le caisson 3, qui porte le socle 2 dans lequel le câble vient s'enficher.

Ainsi, la coiffe 4 recouvre la zone à partir duquel le câble de recharge s'étend, et matérialisé dans l'exemple illustré, par le socle 2 de connexion. Alternativement, la coiffe 4 peut contourner cette zone, en particulier si le câble de rallonge est fixé en permanence et de façon non amovible à la borne de recharge 1.

Dans le mode de réalisation illustré, et selon une caractéristique additionnelle possible de la borne, la coiffe 4 recouvre tout le caisson 3, ce dernier se retrouvant ainsi dans le volume intérieur de la coiffe 4 sous forme d'élément allongé. La coiffe 4 a donc une forme concave, et crée un volume intérieur dans lequel se trouve le caisson 3 une fois la au moins une coiffe 4 et le au moins un caisson 3 assemblés pour former la borne de recharge 1. La coiffe 4 forme ici l'intégralité de l'aspect extérieur de la borne de recharge 1, le caisson 3 étant totalement masqué par elle. Alternativement, si elle est de grandes dimensions, la borne de recharge 1 peut comprendre une pluralité de coiffe 4 qui, chacune, couvre une partie du caisson 3.

Dans une configuration privilégiée de l'invention, illustrée dans les figures 1 à 12 annexées, la coiffe 4 présente, d'une part, une portion supérieure 8 couvrant le caisson 3 sur toute sa circonférence, et, d'autre part, une partie inférieure 9 qui est essentiellement constituée d'une alternance circonférentielle de parties opaques et parties non opaques, s'étendant dans l'axe de la borne de recharge 1, un socle 2 de branchement se trouvant notamment dans le prolongement d'une partie non opaque pour former une indication lumineuse 6. L'éclairage produit par l'indication lumineuse 6 située dans le prolongement d'un socle 2 représente préférentiellement l'état de la charge qui a lieu par ce socle 2. Cette proximité entre le socle 2 et l'indication lumineuse 6 facilite la compréhension pour l'utilisateur. La partie supérieure 8 couvre notamment le au moins un socle 2 de branchement de câble de recharge. Une couronne 11 servant à l'appui de la coiffe 4 sur le caisson 3 se trouve entre la partie inférieure 9 et la partie supérieure 8.

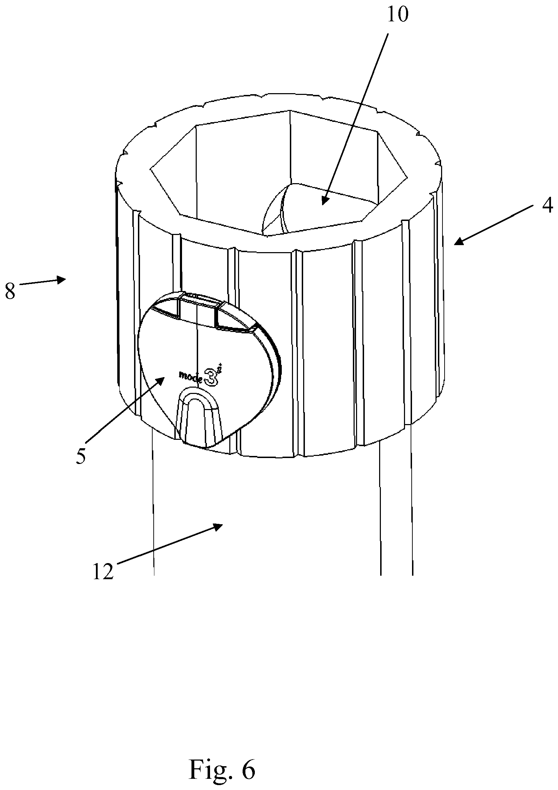

La réalisation de ces deux parties avec du bois est préférée, en particulier des lames de bois s'étendant dans l'axe principal de la borne de recharge 1. Les zones non opaques de la coiffe 4, qui s'alternent avec des zones opaques dans la partie inférieure 9, sont quant à elle préférentiellement réalisées en polycarbonate, ou autre matière transparente ou translucide, suffisamment résistante aux agressions de l'environnement que subit la borne de recharge 1 si elle est placée dans un parking extérieur. La figure 6 montre que la coiffe 4 comprend un tube creux 12 fait en matière non opaque, préférentiellement du polycarbonate, pour former les zones non opaques, les zones opaques étant simplement formées par des profilés 13 qui viennent se plaquer sur la surface extérieur de ce tube creux 12, par exemple des longerons de bois.

Selon une caractéristique additionnelle possible, la coiffe 4 a, dans sa paroi, au moins une zone non opaque au rayonnement visible,
la borne de recharge 1 étant munie d'au moins une source lumineuse visible de l'extérieur à travers ladite zone de sorte à former au moins une indication lumineuse 6 pour l'extérieur de la borne de recharge 1.

Cette zone non opaque rend visible une source lumineuse à travers la paroi de la coiffe 4, en particulier une source de lumière placée au niveau du caisson 3, dans le volume intérieur de la coiffe 4, voire sur sa paroi extérieure.

Une source de lumière est donc placée à l'intérieur de la coiffe 4, préférentiellement sur la périphérie du caisson 3, et est visible depuis l'extérieur de la borne de recharge 1. Une telle indication lumineuse 6 peut servir à indiquer la présence de la borne, ou l'état de la recharge. L'indication de l'état de la recharge est préférentiellement réalisée dans le prolongement du socle, les indications lumineuses placées ailleurs sur la circonférence pouvant servir à signaler la présence de la borne. La borne de recharge 1 est bien entendu préférentiellement munie de plusieurs telles indications lumineuses 6. Comme il sera encore décrit plus loin, dans le cas où la borne de recharge 1 prend la forme d'un mât posé au sol, et s'étendant verticalement, la coiffe 4 peut présenter des zones non opaques qui s'étendent verticalement, et qui, chacune, occupe une portion de la circonférence de la coiffe 4.

Dans certains modes de réalisation, et selon une caractéristique additionnelle possible, le caisson 3 comprend, enchâssé dans sa paroi constitutive, au moins un bandeau lumineux à base de diodes pour former la source de lumière d'une indication lumineuse 6 et en vis-à-vis de laquelle vient une zone non opaque de la coiffe 4, ce bandeau pouvant notamment être positionné dans une porte 7 que comprend le caisson 3. Il est aussi possible de placer une source de lumière dans les montants d'un portique 14 de structure du caisson 3, encore détaillé plus loin. Le caisson 3 peut ainsi présenter plusieurs sources lumineuses sur chaque porte 7, en particulier trois, et une autre sur le côté extérieur de chaque montant du portique 14. Il est ainsi aisé de réaliser l'implantation, à l'intérieur de la coiffe 4, des sources lumineuses.

Il convient de noter que dans le mode de réalisation des figures 13 et 14, l'indication lumineuse 6 est réalisée à l'aide d'une zone non opaque aménagée sur la partie avant de la coiffe 4, rendant visible une source lumineuse aménagée sur la porte 7 du caisson 3.

Selon une caractéristique additionnelle possible, la borne de recharge 1 comprend au moins deux indications lumineuses 6, formée chacune grâce à, d'une part, une zone non opaque au rayonnement visible au niveau de la coiffe 4, et, d'autre part, une source lumineuse au niveau du caisson 3,
une première indication lumineuse 6, préférentiellement la plus proche du branchement du câble de recharge, étant représentative de l'état de la recharge exécutée avec ce câble,
une deuxième indication lumineuse 6 servant à indiquer la présence de la borne de recharge 1. Bien entendu, ces indications lumineuses 6 peuvent aussi servir à transmettre d'autres types d'information.

Dans le cas particulier illustré aux figures 1 à 12 annexées, une zone non opaque de la coiffe 4 s'étend sous la zone de départ de câble, à savoir le couvercle 5 du socle 2 ou le câble fixé à demeure. L'éclairage que cette zone non opaque rend visible représente alors préférentiellement l'état de la recharge qui a lieu au niveau de ce câble : absence ou présence de câble, ampérage circulant, taux de recharge, durée restante, etc. Le codage peut être par couleur, par intensité lumineuse, par nombre de diode, ou autres. Les zones non opaques de part et d'autre peuvent alors servir à indiquer de loin la présence de la borne de recharge 1 par un éclairage continu, par alternance, ou uniquement en dehors des périodes de charge. Il est aussi possible qu'une indication lumineuse soit aménagée sur la partie supérieure de la borne de recharge 1.

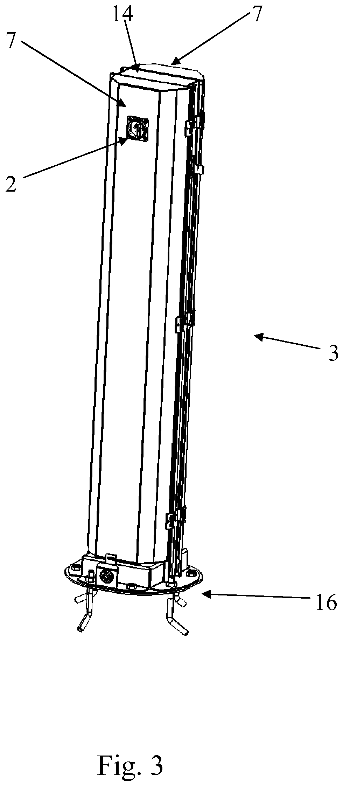

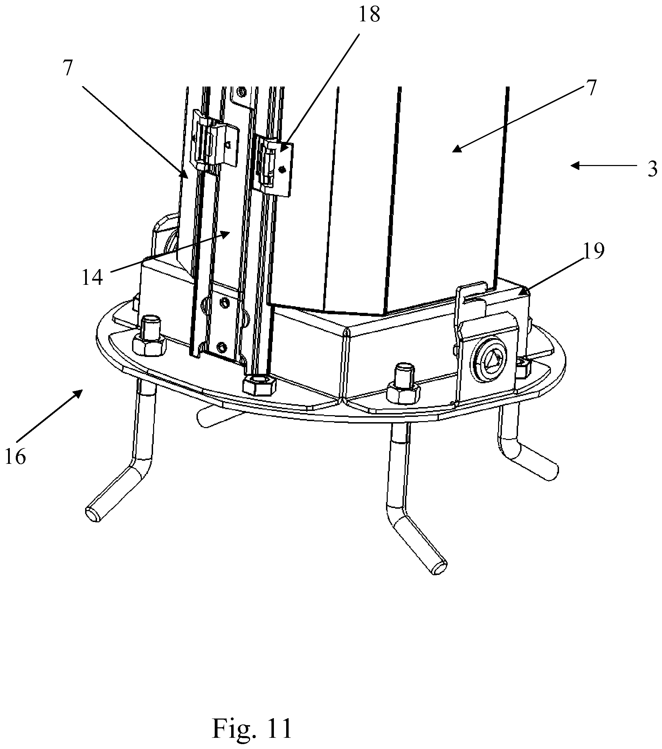

Concernant la conception du caisson 3, et selon une caractéristique optionnelle, il comprend au moins une porte 7, sur laquelle est monté un socle 2 de connexion d'un câble de recharge ainsi qu'une source de lumière, notamment sous la forme d'un bandeau lumineux à base de diodes mentionné plus haut, par exemple une carte de circuit imprimé. Le socle 2 et la source lumineuse peuvent former un seul et même sous ensemble. La figure 3 montre que le caisson 3 présente deux portes 7 qui se font face et s'ouvrent chacune sur le volume intérieur du caisson 3, dans lequel se trouvent les équipements électriques. La figure 11 montre aussi le montage des deux portes 7 sur les montants du portique 14 à l'aide de charnières 18. La borne de recharge 1 permet donc la recharge simultanée de deux véhicules, puisqu'elle présente deux socles 2, chacun d'un côté du caisson 3, de part et d'autre de l'ensemble des équipements électriques de la borne.

Comme la coiffe 4 porte préférentiellement elle-même le volet 5 de protection du socle 2, qui obture donc l'ouverture 10 à travers laquelle le câble peut être branché au socle 2, il est important de réduire le décalage qui peut apparaître entre cette ouverture 10 et le socle 2, compte tenu d'une installation en extérieur et des déformations progressives des composants. A cet effet, et selon une caractéristique additionnelle possible de la borne, elle comprend au moins un socle 2 de connexion d'un câble de recharge, la coiffe 4 reposant en appui sur le caisson 3 à proximité dudit au moins un socle 2, en particulier grâce à une couronne 11 placée dans la coiffe 4 et qui s'étend localement en direction du caisson 3 pour reposer sur lui, au niveau d'une surface d'appui correspondante. On évite ainsi que les variations de la dimension qui sépare la surface d'appui de la coiffe 4 et l'ouverture 10 d'accès au socle 2 n'atteignent des valeurs gênantes. Avantageusement, cette couronne 11 peut aussi servir de guidage pour le mouvement de dépose de la coiffe 4 sur le caisson 3, en particulier dans le cas d'un mouvement linéaire.

Dans le cas particulier du mode de réalisation illustré aux figures 1 à 12 annexées, la coiffe 4 est glissée sur le caisson 3 pour assembler la borne de recharge 1. Il convient de noter que pour le mode de réalisation des figures 13 et 14, la coiffe 4 est préférentiellement assemblée autour du caisson 3. Il est donc utile d'assurer un montage correct de la coiffe 4 sur le caisson 3, en particulier si la borne de recharge 1 est visuellement symétrique. Pour ce faire, il est possible d'avoir recours à un détrompage, par exemple en désaxant les guidages du mouvement par rapport à l'axe de symétrie de la borne de recharge 1, de sorte que la partie mâle et la partie femelle du guidage peuvent coopérer l'une dans l'autre si la coiffe 4 se trouve dans une position prédéterminée, mais ne peuvent coopérer si la coiffe 4 est pivotée de 180° autour de cet axe de symétrie.

Une autre façon de faire le détrompage est de ne permettre la course complète du mouvement d'insertion de la coiffe 4 sur le caisson 3 que si elle se trouve dans la position voulue, le verrouillage de l'assemblage n'étant possible que si la coiffe 4 effectue la totalité de la course possible. De façon générale, le détrompage permet de n'assembler la borne de recharge 1 que si la coiffe 4 se trouve dans une position prédéterminée par rapport au caisson 3.

Ainsi, selon une caractéristique additionnelle possible de la borne de recharge 1, elle comprend un détrompage assurant que seule la position voulue de la coiffe 4 sur le caisson 3 permette le verrouillage de l'une sur l'autre, en particulier par un jeu de butées entre le caisson 3 et la coiffe 4 qui, si la coiffe 4 est dans une mauvaise position, stoppe son mouvement sur le caisson 3 avant qu'elle atteigne la position dans laquelle ils peuvent être verrouillés l'un à l'autre. Il est possible de faire porter ces butées, d'une part, par la couronne 11 d'appui mentionnée plus haut, et, d'autre part, par des surfaces correspondantes au niveau du caisson 3.

La borne de recharge 1 forme donc un assemblage à base d'au moins un caisson 3 et d'au moins une coiffe 4, cette dernière étant facilement interchangeable, donc préférentiellement amovible. Il est bien sûr souhaitable de pouvoir verrouiller le montage de la coiffe 4 sur le caisson 3, en particulier pour éviter les fraudes, les détériorations, les vols, mais aussi pour que l'installateur puisse être sûr du bon montage : si la coiffe 4 ne peut pas être verrouillée sur le caisson 3, c'est qu'elle est mal positionnée. Différentes solutions de verrouillage sont envisageables, et il est souhaitable que la séparation de la coiffe 4 ne nécessite pas la destruction du moyen de verrouillage, comme ce serait le cas pour des soudures ou des solutions d'encliquetage irréversible, par exemple. Avec un moyen de verrouillage réversible, la coiffe 4 peut être facilement changée, même sur un caisson 3 fixé à demeure au sol, ce qui facilite la maintenance, le renouvellement partiel des bornes ou de leur aspect extérieur, etc. La figure 14 montre, entre autres, une patte dans la zone inférieure d'une des deux coques de la coiffe 4, cette patte pouvant servir au verrouillage de la coiffe 4.

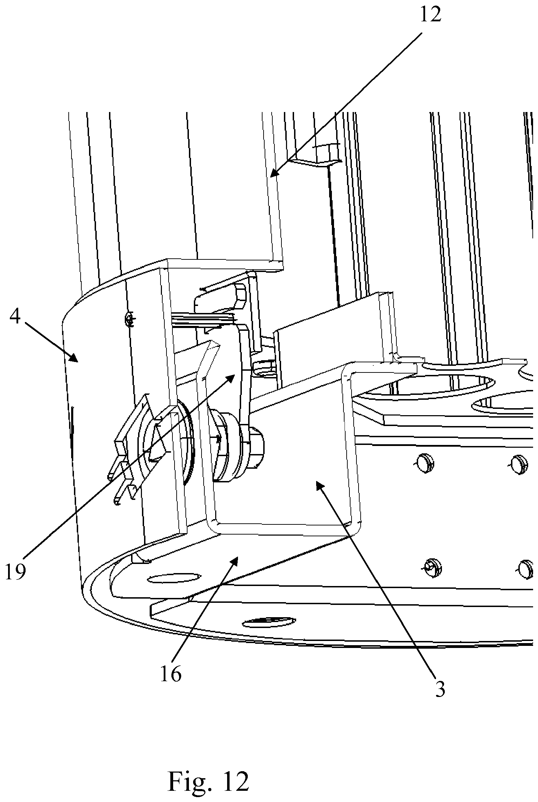

Ainsi, selon une caractéristique avantageuse possible, la coiffe 4 est montée de façon amovible sur le caisson 3, la borne de recharge 1 présentant des moyens de fixation verrouillables et déverrouillables pour fixer ensemble la coiffe 4 et le caisson 3, notamment des crochets montés sur des palettes 19 pivotantes elles mêmes placées sur le caisson 3 et pouvant s'insérer, dans une position de verrouillage, dans une ouverture 10 correspondante de la coiffe 4, éventuellement matérialisée, comme le montre la figure 12, par un axe s'étendant entre deux parois de la coiffe 4. Ces palettes 19 sont avantageusement placées discrètement dans la partie inférieure de la borne de recharge 1. Leur verrouillage et déverrouillage peut n'être possible qu'avec un outil spécifique.

Dans le cas particulier du mode de réalisation illustré dans les figures 1 à 3, la borne de recharge 1 prend une forme allongée de section circulaire, s'étendant le long d'un axe principal 15, qui est vertical une fois la borne de recharge 1 normalement installée. La borne de recharge 1 est donc normalement fixée à même le sol et s'étend verticalement vers le haut. Elle se compose essentiellement des deux éléments décrits ci-dessus, à savoir, d'une part, un caisson 3, et, d'autre part, une coiffe 4. Comme il a été dit, la borne de recharge 1 peut aussi avoir plusieurs caissons 3et/ou plusieurs coiffes 4.

La section intérieure de la coiffe 4 est donc plus grande que la section extérieure du caisson 3 qui se trouve en vis-à-vis une fois la coiffe 4 placée sur le caisson 3. La forme intérieure de la coiffe 4 et la forme extérieure du caisson 3 sont préférentiellement complémentaire, par exemple des éléments essentiellement cylindriques circulaires.

La coiffe 4 amovible peut être glissée sur le caisson 3 par un mouvement de translation parallèle à l'axe principal 15, et, une fois installée, recouvre le caisson 3 sur toute sa longueur ainsi que toute sa circonférence. Un verrouillage en position peut se faire aussi par rotation autour de l'axe une fois la translation complète effectuée.

Le caisson 3 présente ainsi deux extrémités, et comprend une embase 16, qui se trouve à l'extrémité à hauteur du sol une fois la borne de recharge 1 normalement installée.

La borne de recharge 1 présente des moyens de fixation de la coiffe 4 au caisson 3, sous la forme de crochets, disposés au niveau de l'embase 16. Ces crochets peuvent, dans une position de verrouillage, coopérer avec une zone correspondante de la coiffe 4 pour la maintenir en position, et, dans une position de déverrouillage, ne pas coopérer avec ladite zone pour libérer la coiffe 4 et permettre de la dégager du caisson 3. Les crochets de l'embase 16 coopèrent préférentiellement avec une couronne 11 que présente la coiffe 4 et qui se trouve à une extrémité de celle-ci. Bien que ce mode de verrouillage soit très simple à mettre en œuvre et discret, puisque petit et situé au niveau du sol, d'autres types de verrouillage sont possibles.

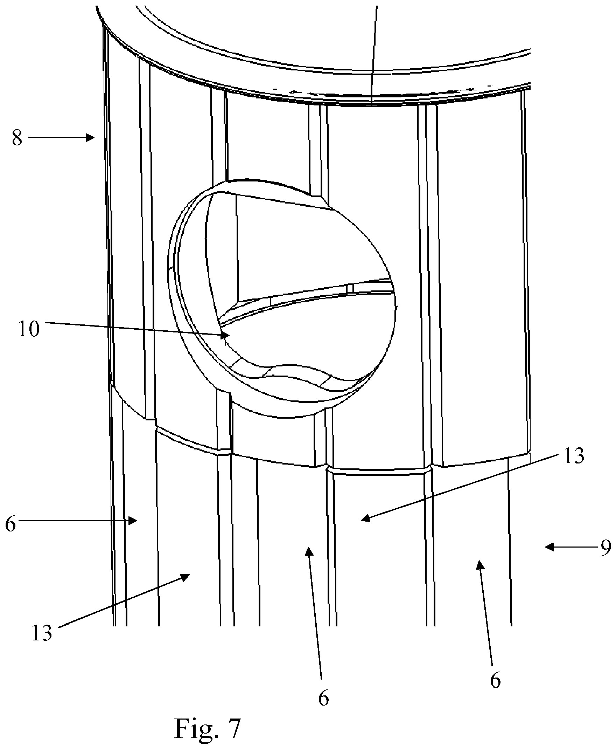

La coiffe 4 est préférentiellement faite essentiellement à partir de bois et présente une partie supérieure 8, qui couvre le caisson 3 sur toute sa circonférence, et au niveau de laquelle se fait le branchement du câble de recharge. En effet, comme le montre la figure 7, la partie supérieure 8 de la coiffe 4 présente au moins une ouverture 10 à travers laquelle un câble de recharge peut traverser la paroi de coiffe 4 et venir être branché dans un socle 2 de connexion correspondant du caisson 3. Cette ouverture 10 est préférentiellement recouverte par un volet 5, préférentiellement du type à charnière formant clapet ou couvercle rabattable, et ainsi essentiellement constitué d'une paroi de fermeture de l'ouverture 10, articulée autour d'un axe de pivot, et ramenée en position fermée grâce à un ressort de rappel.

Pour des raisons de sécurité électrique, il est nécessaire d'assurer une étanchéité autour des bornes du socle 2 de branchement de câble. Lorsque le véhicule est branché, une telle étanchéité est généralement assurée par une conception adéquate de la fiche du câble et du support de branchement complémentaire. Un couvercle 5 est souvent nécessaire pour assurer l'étanchéité en dehors des périodes de branchement. Selon un aspect envisageable de l'invention, le couvercle 5 est donc placé sur la coiffe 4, pour protéger l'ouverture 10 d'accès au socle 2. Il est donc beaucoup plus simple d'adapter l'aspect extérieur de la borne de recharge 1.

Le caisson 3 assure préférentiellement une partie de la fonction d'étanchéité, puisque des particules, gouttes de pluie ou autres, peuvent éventuellement passer par l'ouverture 10 lorsque le câble est branché et que le volet 5 donne alors accès au socle 2 en vis-à-vis. Elles peuvent alors circuler dans l'espace entre la coiffe 4 et le caisson 3, et ressortir en bas de la borne de recharge 1, au niveau d'ouvertures prévues à cet effet. Le caisson 3 forme donc un bloc électrique à étanchéité renforcée, contre laquelle des particules, des gouttes de pluie ou autres, peuvent circuler sans accéder à la zone électrique où se trouvent les équipements électriques, par exemple des disjoncteurs modulaires.

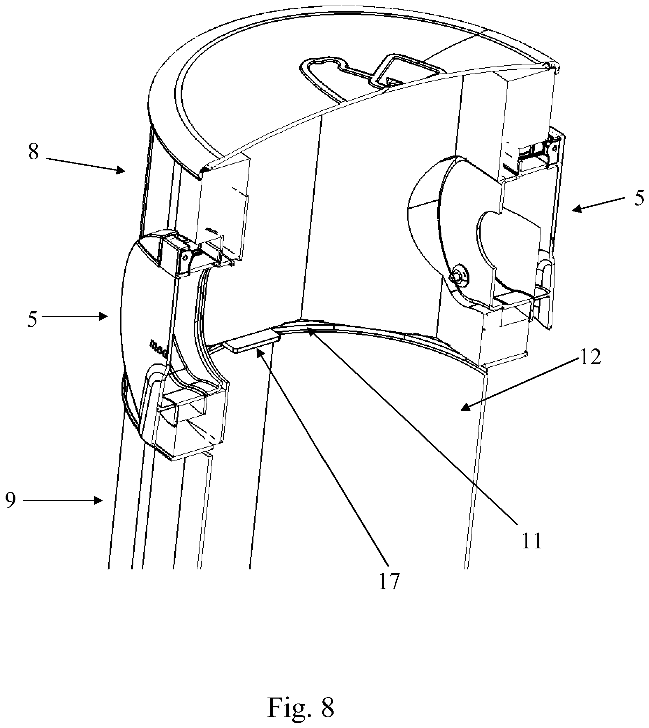

Dans l'exemple illustré à la figure 8, la borne de recharge 1 peut être utilisée avec deux câbles, et présente donc deux socles 2 de branchement, aménagés sur le caisson 3, avec à chaque fois un volet 5 de protection de l'ouverture 10 d'accès correspondante. Les socles 2 sont positionnés sur la borne de recharge 1 de sorte que les volets 5 correspondants se trouve dans la partie supérieure 8, qui assure donc essentiellement, pour la coiffe 4, la fonction d'accès à la recharge. La coiffe 4 forme donc, au niveau de sa partie supérieure 8, un enrobage opaque de l'extrémité supérieure du caisson 3.

La coiffe 4 présente aussi une partie inférieure 9, comprenant des zones opaques et des zones non opaques au rayonnement visible à l'œil. Les zones non opaques permettent ainsi de laisser visibles des sources de lumière qui sont placées dans le volume intérieur de la coiffe 4.

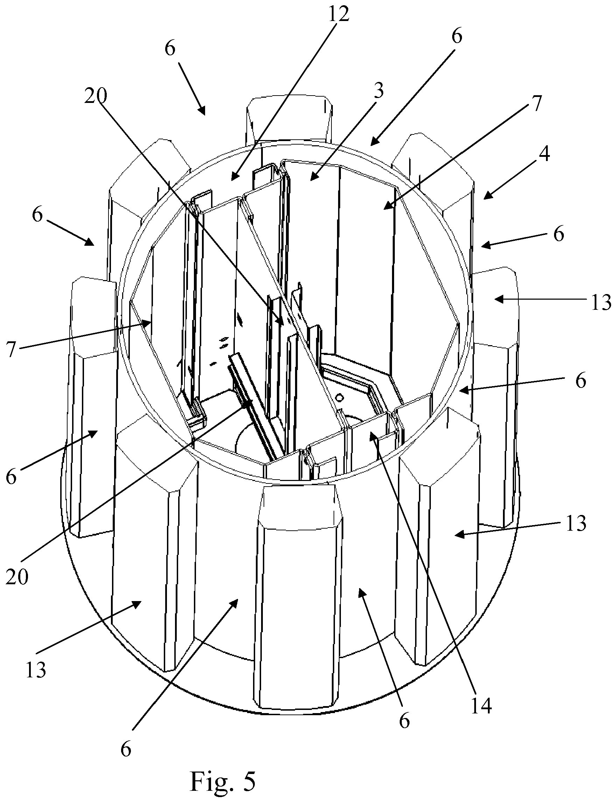

Comme le montre la figure 5, la partie inférieure 9 prend préférentiellement la forme d'une alternance, le long de la circonférence de la borne de recharge 1, de zones non opaques et zones opaques, chacune d'elles s'étendant le long d'une génératrice de la borne de recharge 1. En particulier, la coiffe 4 présente une portion non opaque sous chaque volet 5, pour rendre visible un éclairage placé à cet endroit dans le volume intérieur de la coiffe 4 et rendant compte de l'éventuelle connexion d'un câble de recharge ou autre statut de recharge. D'autres zones non opaques peuvent être aménagées pour rendre visibles d'autres sources intérieures de lumière, permettant par exemple de signaler visuellement la présence d'une borne de recharge 1. Les zones non opaques peuvent être faites avec le même matériau que la partie supérieure 8 et contribuer ainsi à apporter à la coiffe 4 sa tenue mécanique. Les zones non opaques forment ainsi des fenêtres s'étendant entre la portion supérieure 8 et l'extrémité de la coiffe 4 située en vis-à-vis, au niveau du sol. La portion inférieure 9 est préférentiellement faite, d'une part, pour les zones opaques, de bois, et, d'autre part, pour les zones non opaques, de polycarbonate. Les zones non opaques peuvent être transparentes ou translucides.

Comme il sera encore décrit plus loin, le caisson 3 présente des portes 7, pour un accès aux composants électriques, ces portes 7 pouvant porter des sources de lumières ou être elles-mêmes non opaques pour laisser passer un rayonnement d'une source de lumière placée à l'intérieur du caisson 3.

La coiffe 4 est guidée dans son mouvement d'insertion sur le caisson 3 grâce à un moyen de guidage linéaire, notamment sous forme d'un jeu d'ergot 17 et de rainure. Ce guidage peut être réalisé à l'aide la couronne 11 décrite plus haut. Un mouvement de montage linéaire le long de l'axe principal 15 est envisagé, mais un mouvement de rotation autour de cet axe est aussi possible, le moyen de guidage étant bien entendu de conception adaptée.

La coiffe 4 se trouve en appui sur le caisson 3, et ce préférentiellement dans une zone proche des socles 2 de connexion. Les éventuelles variations dimensionnelles de la coiffe 4 ne conduisent ainsi pas à un décalage entre l'ouverture 10 prévue sur la coiffe 4 et le socle 2 correspondant, ce qui est particulièrement nécessaire si la coiffe 4 est faite essentiellement à base de bois. Avantageusement, cet appui est réalisé, pour la coiffe 4, dans la zone entre la partie supérieure 8 et la partie inférieure 9. Ainsi, comme le montre la figure 8, la coiffe 4 présente dans cet zone un ergot 17 s'étendant depuis sa paroi et vers l'intérieur du caisson 3, porté par une couronne 11, métallique ou autre, placée entre la partie supérieure 8 et la partie inférieure 9 qui s'étendent à partir d'elle. Cet ergot 17, lorsque la coiffe 4, enfilée par le haut sur le caisson 3, arrive dans la position normale d'utilisation, se trouve en butée sur une zone correspondante du caisson 3.

Le caisson 3 se compose essentiellement d'une structure centrale comprenant un portique 14 en forme de U inversé et contre laquelle viennent deux portes 7, chacune d'un côté. Le socle 2 de branchement du câble de recharge est préférentiellement monté dans la porte 7. La structure, entre les deux portes 7, comprend les équipements électriques, à savoir des modules de distribution d'énergie, des modules de sécurité, disjoncteur de surcharge ou différentiel, et/ou des modules de communication, paiement, préférentiellement montés sur un rail 20 profilé ou plusieurs. L'ouverture de l'une ou de l'autre porte 7 donne donc accès à ces modules, d'un côté ou de l'autre. La structure est fixée sur l'embase 16, cette dernière étant destinée à être ancrée au sol.

Les portes 7 se ferment sur la structure de façon hermétique, et des joints sont prévus à cet effet entre ces composants.

Les portes 7 présentent éventuellement des zones non opaques, laissant passer la lumière émise par une source placée à l'intérieure même du caisson 3, préférentiellement sous la forme de diodes. La coiffe 4, une fois assemblée sur le caisson 3, est tel que ses zones non opaques arrivent en vis-à-vis des zones non opaques du caisson 3 ou des zones lumineuses.

Des sources lumineuses peuvent donc se trouver à l'intérieur de la coiffe 4, voire du caisson 3, et être visibles depuis l'extérieur grâce à une zone non opaque de la coiffe 4 voire aussi du caisson 3. Ces sources lumineuses sont éventuellement au niveau de la porte 7 et/ou au niveau d'une autre paroi du caisson 3, et, lorsque la coiffe 4 est en vis-à-vis, sont visibles grâce à une zone non opaque de ladite coiffe 4, comme décrit plus haut.

Des sources lumineuses peuvent donc se trouver directement sur la surface extérieure du caisson 3, là aussi au niveau de la porte 7 ou au niveau d'une autre partie de la surface extérieure. Bien entendu, seule la coiffe 4 doit alors être munie d'une zone non opaque pour rendre cette source de lumière visible de l'extérieur. Préférentiellement, la porte 7 comprend un bandeau lumineux fait de diodes, visible grâce à une zone non opaque de la coiffe 4 à cet endroit. Le socle 2 de branchement et un tel bandeau lumineux peuvent être sous la forme d'un seul et même module rapporté dans la porte 7.

Avantageusement, la borne de recharge 1 présente une indication lumineuse proche du socle 2 de branchement. Ainsi, comme le socle 2 de branchement est préférentiellement monté sur la porte 7, cette dernière permet l'émission d'un signal lumineux, et porte donc elle-même une source de lumière ou présente une zone non opaque pour laisser une telle source visible.

Bien entendu, l'invention n'est pas limitée au mode de réalisation décrit et représenté aux dessins annexés. Des modifications restent possibles, notamment du point de vue de la constitution des divers éléments, par combinaison différente de tout ou partie des caractéristiques décrites ci-dessus, ou par substitution d'équivalents techniques, sans sortir pour autant du domaine de protection de l'invention.

## Revendications

1. Borne de recharge (1) comprenant des équipements électriques pour la gestion de la recharge de batterie motrice de véhicule, tels que modules pour le contrôle du courant de recharge, la mesure d'électricité, la sécurité, la communication, le paiement, un câble de connexion ou simplement un socle (2) de branchement d'un tel câble,
la borne de recharge (1) comprenant un caisson (3), dans lequel est monté l'essentiel des équipements électriques, et une coiffe (4) placée sur ledit caisson (3),
la borne de recharge (1) présentant au moins un socle (2) de branchement pour un câble de recharge, ainsi qu'un volet (5) de protection pour ledit socle (2), le au moins un socle (2) étant monté sur le caisson (3), **caractérisé en ce que** son volet (5) est monté sur la coiffe (4).

2. Borne de recharge (1) selon la revendication 1, **caractérisée en ce que**
la coiffe (4) recouvre tout le caisson (3).

3. Borne de recharge (1) selon l'une quelconque des revendications 1 ou 2, **caractérisée en ce que**
la coiffe (4) a, dans sa paroi, au moins une zone non opaque au rayonnement visible,
la borne de recharge (1) étant munie d'au moins une source lumineuse visible de l'extérieur à travers ladite zone de sorte à former au moins une indication lumineuse (6) pour l'extérieur de la borne de recharge (1).

4. Borne de recharge (1) selon la revendication 3, **caractérisée en ce que**
le caisson (3) comprend, enchâssé dans sa paroi constitutive, au moins un bandeau lumineux à base de diodes pour former la source de lumière d'une indication lumineuse (6) et en vis-à-vis de laquelle vient une zone non opaque de la coiffe (4).

5. Borne de recharge (1) selon l'une quelconque des revendications 3 ou 4, **caractérisée en ce que**
la borne de recharge (1) comprend au moins deux indications lumineuses (6), formée chacune grâce à, d'une part, une zone non opaque au rayonnement visible au niveau de la coiffe (4), et, d'autre part, une source lumineuse au niveau du caisson (3),
une première indication lumineuse (6), préférentiellement la plus proche du branchement du câble de recharge, étant représentative de l'état de la recharge exécutée avec ce câble,
une deuxième indication lumineuse (6) servant à indiquer la présence de la borne de recharge (1).

6. Borne de recharge (1) selon l'une quelconque des revendications 1 à 5, **caractérisée en ce que**
le caisson (3) comprend au moins une porte (7), sur laquelle est monté un socle (2) de connexion d'un câble de recharge ainsi qu'une source de lumière.

7. Borne de recharge (1) selon l'une quelconque des revendications 1 à 6, **caractérisée en ce que**
elle comprend au moins un socle (2) de connexion d'un câble de recharge, la coiffe (4) reposant en appui sur le caisson (3) à proximité dudit au moins un socle (2).

8. Borne de recharge (1) selon l'une quelconque des revendications 1 à 7, **caractérisée en ce que**
elle comprend un détrompage assurant que seule la position voulue de la coiffe (4) sur le caisson (3) permette le verrouillage de l'une sur l'autre.

9. Borne de recharge (1) selon l'une quelconque des revendications 1 à 8, **caractérisée en ce que**
la coiffe (4) est montée de façon amovible sur le caisson (3), la borne de recharge (1) présentant des moyens de fixation verrouillables et déverrouillables pour fixer ensemble la coiffe (4) et le caisson (3).

10. Borne de recharge (1) selon l'une quelconque des revendications 1 à 9, **caractérisée en ce que**
la coiffe (4) présente, d'une part, une portion supérieure (8) couvrant le caisson (3) sur toute sa circonférence, et, d'autre part, une partie inférieure (9) qui est essentiellement constituée d'une alternance circonférentielle de parties opaques et parties non opaques, s'étendant dans l'axe de la borne de recharge (1).

## Patentansprüche

1. Ladestation (1), die elektrische Ausrüstungen zum Verwalten des Ladens einer Fahrzeugantriebsbatterie aufweist, wie Module zur Steuerung des Ladestroms, zum Messen der elektrischen Energie, für die Sicherheit, die Kommunikation, die Zahlungsabwicklung, und ein Verbindungskabel oder eine Steckdose (2) zum Anschließen eines solchen Kabels,
wobei die Ladestation (1) einen Kasten (3) aufweist, in dem die wichtigsten elektrischen Ausrüstungen angebracht sind, und eine Haube (4), die auf dem Kasten (3) platziert ist,
wobei die Ladestation (1) mindestens eine Steckdose (2) zum Anschließen eines Ladekabels aufweist, sowie eine Schutzklappe (5) für die Steckdose (2), wobei die mindestens eine Steckdose (2) an dem Kasten (3) angebracht ist, **dadurch gekennzeichnet, dass** ihre Klappe (5) an der Haube (4) angebracht ist.

2. Ladestation (1) nach Anspruch 1, **dadurch gekennzeichnet, dass**
die Haube (4) den gesamten Kasten abdeckt (3).

3. Ladestation (1) nach einem der Ansprüche 1 oder 2, **dadurch gekennzeichnet, dass**
die Haube (4) in ihrer Wand mindestens eine Zone hat, die für sichtbare Strahlung durchlässig ist,
die Ladestation (1) mit mindestens einer von außen durch diese Zone sichtbaren Lichtquelle ausgestattet ist, um mindestens eine Leuchtanzeige (6) für die Außenseite der Ladestation (1) zu bilden.

4. Ladestation (1) nach Anspruch 3, **dadurch gekennzeichnet, dass**
der Kasten (3), eingefügt in seine konstituierende Wand, mindestens einen Lichtstreifen auf Basis von Dioden aufweist, um die Lichtquelle einer Leuchtanzeige (6) zu bilden, und gegenüber der sich eine lichtdurchlässige Zone der Haube (4) befindet.

5. Ladestation (1) nach einem der Ansprüche 3 oder 4, **dadurch gekennzeichnet, dass**
die Ladestation (1) mindestens zwei Leuchtanzeigen (6) aufweist, die jeweils mittels einerseits einer Zone in Höhe der Haube (4), die für sichtbare Strahlung durchlässig ist, und andererseits einer Lichtquelle in Höhe des Kastens (3) gebildet werden,
eine erste Leuchtanzeige (6), vorzugsweise diejenige, die dem Anschluss des Ladekabels am nächsten liegt, repräsentativ für den Zustand des mit diesem Kabel durchgeführten Ladevorgangs ist,
eine zweite Leuchtanzeige (6) dazu dient, das Vorhandensein der Ladestation (1) anzuzeigen.

6. Ladestation (1) nach einem der Ansprüche 1 bis 5, **dadurch gekennzeichnet, dass**
der Kasten (3) mindestens eine Tür (7) aufweist, an der eine Steckdose (2) zum Anschließen eines Ladekabels sowie eine Lichtquelle angebracht ist.

7. Ladestation (1) nach einem der Ansprüche 1 bis 6, **dadurch gekennzeichnet, dass**
sie mindestens eine Steckdose (2) zum Anschließen eines Ladekabels aufweist, wobei die Haube (4) auf dem Kasten (3) in der Nähe der mindestens einen Steckdose (2) ruht.

8. Ladestation (1) nach einem der Ansprüche 1 bis 7, **dadurch gekennzeichnet, dass**
sie eine Verwechslungssicherung aufweist, die sicherstellt, dass nur die gewünschte Position der Haube (4) auf dem Kasten (3) die gegenseitige Verriegelung ermöglicht.

9. Ladestation (1) nach einem der Ansprüche 1 bis 8, **dadurch gekennzeichnet, dass**
die Haube (4) abnehmbar auf dem Kasten (3) angebracht ist, wobei die Ladestation (1) ver- und entriegelbare Befestigungsmittel zum Befestigen der Haube (4) und des Kastens (3) miteinander aufweist.

10. Ladestation (1) nach einem der Ansprüche 1 bis 9, **dadurch gekennzeichnet, dass**
die Haube (4) einerseits einen oberen Bereich (8) aufweist, der den Kasten (3) über seinen gesamten Umfang abdeckt, und andererseits einen unteren Bereich (9), der im Wesentlichen aus über den Umfang wechselnden lichtundurchlässigen und lichtdurchlässigen Bereichen besteht, die sich in der Achse der Ladestation (1) erstrecken.

## Claims

1. Charging point (1) comprising electrical devices for managing the charging of a vehicle drive battery, such as modules for controlling the charging current, measuring electricity, security, communication, payment, a connection cable or simply a socket (2) for connecting such a cable,
the charging point (1) comprises a case (3), in which most of the electrical devices are mounted, and a cover (4) placed on said case (3),
the charging point (1) having at least one socket (2) for connecting a charging cable, and a protective flap (5) for said socket (2), the at least one socket (2) being mounted on the case (3), **characterized in that** its flap (5) is mounted on the cover (4).

2. Charging point (1) according to Claim 1, **characterized in that** the cover (4) covers the entire case (3).

3. Charging point (1) according to either of Claims 1 and 2, **characterized in that** the cover (4) has, in its wall, at least one region that is not opaque to visible radiation, the charging point (1) being provided with at least one light source visible from the exterior through said region so as to form at least one light indicator (6) for the exterior of the charging point (1).

4. Charging point (1) according to Claim 3, **characterized in that** the case (3) comprises, set into its constituent wall, at least one light strip based on diodes in order to form the light source for a light indicator (6) and facing which there is a non-opaque region of the cover (4).

5. Charging point (1) according to either of Claims 3 and 4, **characterized in that** the charging point (1) comprises at least two light indicators (6), each formed by means of, on the one hand, a region that is not opaque to visible radiation at the cover (4) level, and, on the other hand, a light source at the case (3) level, a first light indicator (6), preferably the one closest to the connection of the charging cable, being representative of the state of the charging carried out using this cable, a second light indicator (6) serving to indicate the presence of the charging point (1).

6. Charging point (1) according to any one of Claims 1 to 5, **characterized in that** the case (3) comprises at least one door (7), on which a socket (2) for connecting a charging cable and a light source are mounted.

7. Charging point (1) according to any one of Claims 1 to 6, **characterized in that** it comprises at least one socket (2) for connecting a charging cable, the cover (4) resting on the case (3) in proximity to said at least one socket (2).

8. Charging point (1) according to any one of Claims 1 to 7, **characterized in that** it includes keying ensuring that only when the cover (4) is on the case (3) in the desired position can the one be locked onto the other.

9. Charging point (1) according to any one of Claims 1 to 8, **characterized in that** the cover (4) is removably mounted on the case (3), the charging point (1) having lockable and unlockable fixing means for fixing the cover (4) and the case (3) together.

10. Charging point (1) according to any one of Claims 1 to 9, **characterized in that** the cover (4) has, on the one hand, an upper portion (8) that covers the case (3) around its entire circumference, and, on the other hand, a lower portion (9) that essentially consists of a circumferential alternation of opaque portions and non-opaque portions, extending along the axis of the charging point (1).
